# FASCICULE DE BREVET EUROPEEN

(11) **EP 2 791 407 B1**
(45) Date de publication et mention de la délivrance du brevet: **06.02.2019**
(21) Numéro de dépôt: 12821291.7
(22) Date de dépôt: 10.12.2012
(51) Int. Cl.: D03D 25/00, B29C 70/24

(54) **STRUCTURE FIBREUSE TISSEE 3D, PREFORME FIBREUSE OBTENUE A PARTIR D'UNE TELLE STRUCTURE FIBREUSE ET PIECE EN MATERIAU COMPOSITE COMPORTANT UNE TELLE PREFORME**
GEWEBTE 3D-FASERSTRUKTUR, AUS DIESER FASERSTRUKTUR GEWONNENE FASERVORFORM UND VERBUNDWERKSTOFFTEIL MIT SOLCH EINER VORFORM
3D WOVEN FIBER STRUCTURE, FIBROUS PREFORM OBTAINED FROM SUCH A FIBER STRUCTURE, AND COMPOSITE MATERIAL PART COMPRISING SUCH A PREFORM

(30) Priorité: 14.12.2011 US 201161570423 P
(43) Date de publication de la demande: 22.10.2014
(73) Titulaire: Safran Aircraft Engines, 75015 Paris (FR)
(72) Inventeur: MARCHAL, Yann, Portsmouth, New Hampshire 03801 (US); COUPE, Dominique, Medford, Massachusetts 02155 (US); FRUSCELLO, Monica, Amesbury, Massachusetts 01913 (US); GOERING, Jonathan, York, Maine 03909 (US)
(74) Mandataire: Boura, Olivier
(86) Numéro de dépôt international: PCT/FR2012/052855
(87) Numéro de publication internationale: WO 2013/088042

(56) Documents cités:
- US-B1- 6 446 675
- US-B2- 6 874 543

## Description

### Arrière-plan de l'invention

L'invention concerne la réalisation de structure fibreuse tissée en une seule pièce par tissage tridimensionnel 3D, notamment pour la fabrication de pièce en matériau composite. Un domaine particulier, mais non exclusif, d'application de l'invention est la réalisation de structures fibreuses pour des préformes de pièces en matériau composite pour des aéronefs ou des turbomachines, notamment des turbomoteurs aéronautiques.

De façon bien connue, une pièce en matériau composite peut être obtenue par réalisation d'une préforme fibreuse et densification de celle-ci par une matrice. Selon l'application envisagée, la préforme peut être fibres de verre, carbone ou céramique et la matrice peut être en un matériau organique (polymère), en carbone ou en céramique.

Pour des pièces de forme relativement complexe, il est connu (voir par exemple US 6 446 675 B1) de réaliser une structure ou ébauche fibreuse en une seule pièce par tissage 3D (ou multi-couches) et de mettre en forme cette ébauche pour obtenir une préforme fibreuse ayant une forme voisine de celle d'une pièce à fabriquer. La mise en forme comprend fréquemment une opération de pliage pour former un angle entre deux parties de la structure tissée 3D.

Il peut en résulter une sollicitation mécanique excessive de fils de la structure fibreuse dans une zone de pliure, notamment du côté intérieur de l'angle formé lorsque celui-ci est prononcé.

### Objet et résumé de l'invention

L'invention a pour but de remédier à un tel inconvénient.

Selon un premier aspect de l'invention, ce but est atteint grâce à une structure fibreuse tissée par tissage tridimensionnel avec une pluralité de couches de fils de chaîne liées entre elles par des fils de trame d'une pluralité de couches de fils de trame, la structure fibreuse ayant une première partie et une deuxième partie situées dans le prolongement l'une de l'autre en direction trame et pliables l'une par rapport à l'autre au niveau d'une zone de pliure,

structure dans laquelle, dans la zone de pliure et dans chaque plan de trame de la structure fibreuse, deux fils de trame situés dans une région adjacente à une face externe de la structure fibreuse ont des trajets qui se croisent.

Comme cela sera montré plus loin, une telle disposition permet de limiter la courbure imposée aux fils dans la zone de pliure lors d'un pliage.

Selon un autre aspect de l'invention, celle-ci vise une préforme fibreuse formée par une structure fibreuse tissée par tissage tridimensionnel avec une pluralité de couches de fils de chaîne liées entre elles par des fils de trame d'une pluralité de couches de fils de trame, la préforme fibreuse ayant une première partie et une deuxième partie situées dans le prolongement l'une de l'autre en direction trame et formant entre elles un angle par pliage au niveau d'une zone de pliure,

préforme dans laquelle, dans la zone de pliure et dans chaque plan de trame de la structure fibreuse, deux fils de trame situés dans une région adjacente à une face externe de la structure fibreuse située du côté intérieur de l'angle ont des trajets qui se croisent.

Avantageusement, l'un des deux fils de trame est celui qui, dans la première ou la deuxième partie est le plus proche de la face externe.

Selon un mode de réalisation de la structure fibreuse ou de la préforme fibreuse, dans la zone de pliure, les fils des deux couches de fils de trame les plus proches de la face externe de la structure fibreuse ont des trajets qui se croisent.

Selon un autre mode de réalisation de la structure fibreuse ou de la préforme fibreuse, dans la zone de pliure, les fils de la première et de la troisième couches de fils de trame à partir de la face externe de la structure fibreuse ont des trajets qui se croisent, de même que les fils de la deuxième et de la quatrième couches de fils de trame.

Selon encore d'autres aspects de l'invention, celle-ci vise une structure fibreuse et une préforme fibreuse telles que définies ci-avant dans lesquelles trame et chaîne sont inversées.

Selon encore un autre aspect de l'invention, celle-ci vise une pièce en matériau composite comprenant une préforme fibreuse telle que définie ci-avant densifiée par une matrice.

### Brève description des dessins

L'invention sera mieux comprise à la lecture de la description, faite ci-après, à titre indicatif mais non limitatif, en référence aux dessins annexés, sur lesquels :
- la figure 1 est une vue très schématique d'un plan d'une structure fibreuse tissée 3D selon un mode de réalisation de l'invention ;
- la figure 2 est une vue très schématique d'un plan d'une préforme fibreuse obtenue après mise en forme de la structure fibreuse de la figure 1 ;
- la figure 3 est une vue schématique en perspective d'une pièce fabriquée à partir d'une préforme du type de celle de la figure 2 ;
- la figure 4 est une vue schématique en perspective d'une autre pièce pouvant être fabriquée à partir d'une préforme fibreuse selon l'invention ;
- la figure 5 est une vue très schématique d'un plan d'une structure fibreuse tissée 3D selon une variante du mode de réalisation de la figure 1 ;
- la figure 6 est une vue très schématique d'un plan d'une préforme fibreuse obtenue après mise en forme de la structure fibreuse de la figure 5 ;
- la figure 7 est une vue schématique en perspective d'une pièce fabriquée à partir d'une préforme du type de celle de la figure 6 ;
- la figure 8 est une vue très schématique d'un plan d'une structure tissée 3D selon un autre mode de réalisation de l'invention ; et
- la figure 9 est une vue très schématique d'un plan d'une préforme fibreuse obtenue après mise en forme de la structure fibreuse de la figure 8.

### Description détaillée de modes de réalisation

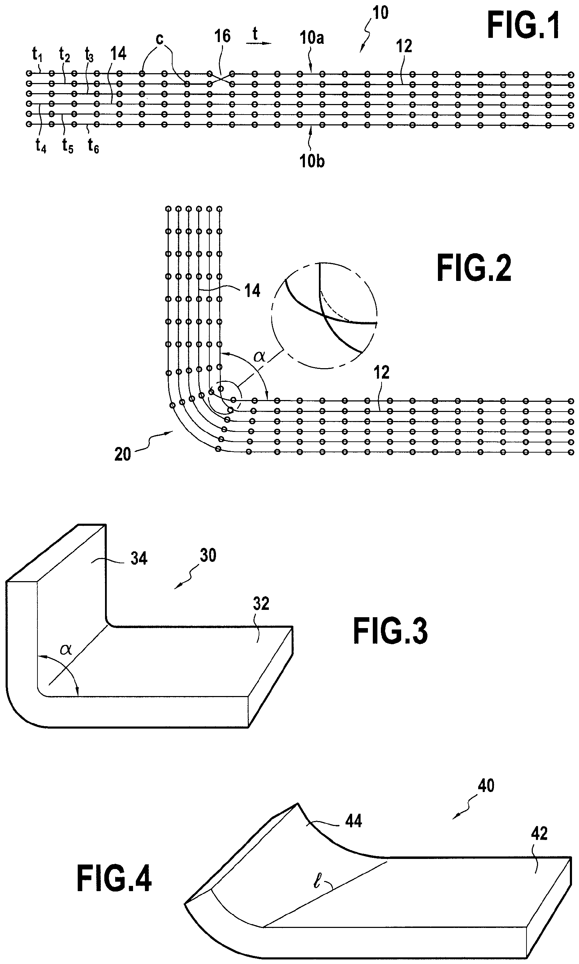

Par souci d'allègement des dessins, sur les figures 1, 2, 5, 6, 8, et 9, qui représentent des plans de trame, les trajets des fils de trame sont représentés par des segments rectilignes tandis que les fils de chaîne sont représentés par des points. Par plan de trame, on entend un plan perpendiculaire à la direction chaîne contenant une colonne de fils de trame. S'agissant de tissage 3D, l'on comprendra que les fils d'une des directions trame et chaîne suivent des trajets sinueux afin de lier entre eux des fils de l'autre direction appartenant à des couches de fils différentes, exception faite des déliaisons éventuelles et de fils de trame éventuellement ajoutés en surface pour y réaliser un tissage bidimensionnel (2D). Différentes armures de tissage 3D peuvent être utilisées, telles que des armures interlock, multi-satin ou multi-toile, par exemple, comme décrit notamment dans le document WO 2006/136755. On pourra notamment utiliser une armure interlock 3D incluant dans cette définition une armure de surface de type satin.

La figure 1 montre très schématiquement un plan de trame d'une structure fibreuse 10 tissée 3D en une seule pièce ayant des faces externes opposées 10a, 10b. La structure fibreuse 10 est formée d'une pluralité de couches de fils de chaîne c, les fils de chaîne de couches différentes étant liés entre eux par des fils de trame d'une pluralité de couches de fils de trame t₁ à t₆ qui réalisent le tissage 3D. Sur la figure 1, la référence t désigne la direction trame.

La structure fibreuse 10 comprend deux parties 12, 14 situées dans le prolongement l'une de l'autre et qui sont pliables l'une par rapport à l'autre au niveau d'une zone de pliure 16 pour former une préforme fibreuse 20 telle que montrée par la figure 2 avec les parties 12 et 14 formant entre elles un angle α inférieur à 180°. La préforme fibreuse 20 a dans l'exemple illustré une section sensiblement en L.

Les trajets des fils de trame t₁ et t₂ les plus proches de la face 10a se croisent au niveau de la zone de pliure 16, la face 10a étant celle qui, après pliage, est située du côté intérieur de l'angle formé par les parties 12 et 14. De la sorte, les dispositions des fils de trame t₁, t₂ dans chaque plan de la structure fibreuse dans la partie 12 et dans la partie 14 d'un côté et de l'autre de la zone de pliure 16 sont inversées.

Comme le montre plus particulièrement le détail à échelle agrandie de la figure 2, le rayon de courbure imposé aux fils de trame t₁ et t₂ est donc supérieur à celui (montré en tirets) qui serait imposé au fil t₁ sans croisement avec le fil t₂. Le risque d'endommagement ou de flambement des fils de trame au voisinage de la face 10a est donc réduit par cette diminution de la courbure imposée, ce risque étant d'autant plus élevé que l'angle α est réduit.

La figure 3 montre une pièce 30 en matériau composite telle qu'elle peut être obtenue par densification de la préforme 20 par une matrice avec deux parties 32, 34 formant entre elles un angle non nul inférieur à 180° correspondant à l'angle α de la figure 2.

Dans le cas des figures 2 et 3, le pliage est réalisé autour d'un axe sensiblement parallèle à la direction chaîne.

En variante, le pliage peut être réalisé autour d'un axe ℓ parallèle à un plan formé par les directions trame et chaîne mais non parallèle à celles-ci pour donner, après densification de la préforme fibreuse, une pièce 40 telle qu'illustrée par la figure 4 avec deux parties 42, 44 formant entre elles un angle non nul inférieur à 180°. Dans un tel cas, pour respecter l'orientation de la zone de pliure, on peut faire en sorte que les emplacements de croisement des fils de trame au voisinage de la face 10a du côté intérieur de l'angle ne se situent pas sur une même colonne de chaîne sur toute la largeur de la préforme mais évoluent d'un plan de trame à un autre. En variante, on pourrait utiliser une préforme semblable à celle utilisée pour la pièce de la figure 3, mais en conformant la préforme en la plaçant en biais dans un moule ayant la forme désirée, de manière à aligner les emplacements de croisement des fils de trame avec l'axe ℓ.

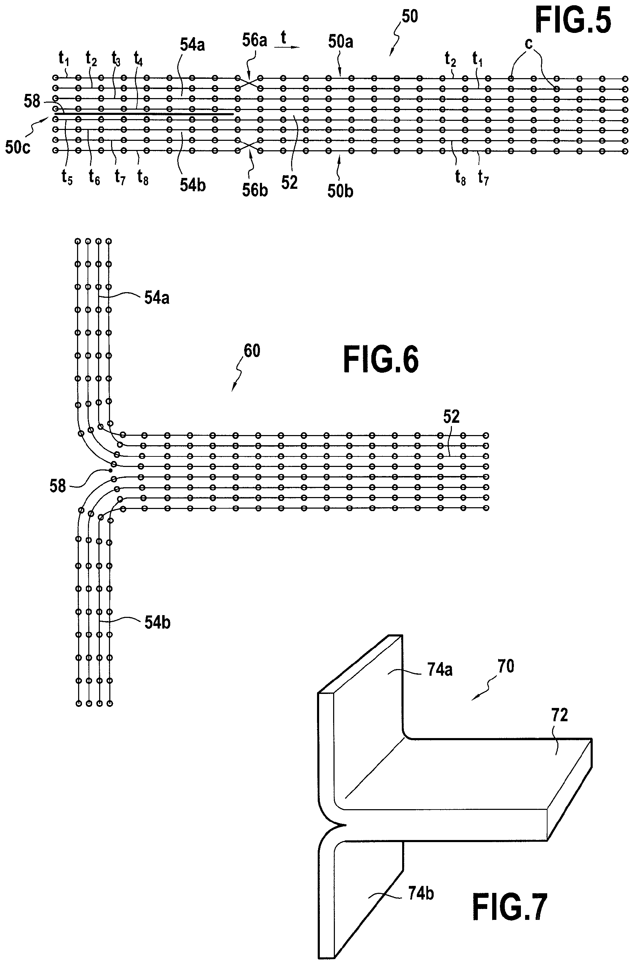

La figure 5 montre très schématiquement un plan de trame d'une structure fibreuse 50 tissée 3D en une seule pièce ayant des faces externes opposées 50a, 50b. La structure fibreuse 50 est formée d'une pluralité de couches de fils de chaîne c.

La structure fibreuse 50 comprend une partie 52 dans laquelle des fils de chaîne de toutes les couches de fils de chaîne sont liés entre eux par tissage 3D par des fils de trame d'une pluralité de couches de fils de trame t₁ à t₈ qui réalisent un tissage 3D. La structure fibreuse 50 comprend en outre deux parties 54a et 54b qui sont situées dans le prolongement de la partie 52, de part et d'autre d'une déliaison 58 qui s'étend depuis un bord 50c de la structure fibreuse 50 sur une partie de la dimension de celle-ci en direction trame, la déliaison 58 étant représentée par un trait plein. Dans chacune des parties 54a et 54b, des fils de chaîne de toutes les couches de fils de chaîne sont liés entre eux par tissage 3D par des fils de trame respectivement t₁ à t₄ et t₅ à t₈, aucune liaison n'étant réalisée à travers la déliaison 58 entre les parties 54a et 54b. Dans l'exemple illustré, les nombres de couches de fils de chaîne dans les parties 54a et 54b sont égaux à 4. Bien entendu, ces nombres pourront être différents de 4, même différents entre eux tout en étant au moins égaux à 2.

Les parties 54a et 54b sont dépliables vers l'extérieur par rapport à la partie 52 au niveau de zones de pliures respectives 56a, 56b pour former une préforme fibreuse 60 telle que montrée par la figure 6 ayant une section sensiblement en forme de T.

Les trajets des fils de trame t₁ et t₂ les plus proches de la face 10a se croisent au niveau de la zone de pliure 56a de telle sorte que les dispositions des fils de trame t₁ et t₂ dans chaque plan de la structure fibreuse 50 dans la partie 52 et dans la partie 54a sont inversées. De même, les trajets des fils de trame t₇ et t₈ les plus proches de la face 50b se croisent au niveau de la zone de pliure 56b de telle sorte que les dispositions des fils de trame t₇ et t₈ dans chaque plan de la structure fibreuse dans la partie 52 et dans la partie 54b sont inversées.

Comme dans le mode de réalisation des figures 1 et 2, une moindre courbure est ainsi imposée aux fils de trame adjacents aux faces 50a, 50b en comparaison avec une disposition des fils de trame t₁, t₂ et t₇, t₈ sans croisements mutuels.

La figure 7 montre une pièce 70 en matériau composite à section sensiblement en forme de T telle qu'elle peut être obtenue par densification de la préforme 60 par une matrice, avec une partie 72 prolongée à une extrémité par des ailes 74a, 74b.

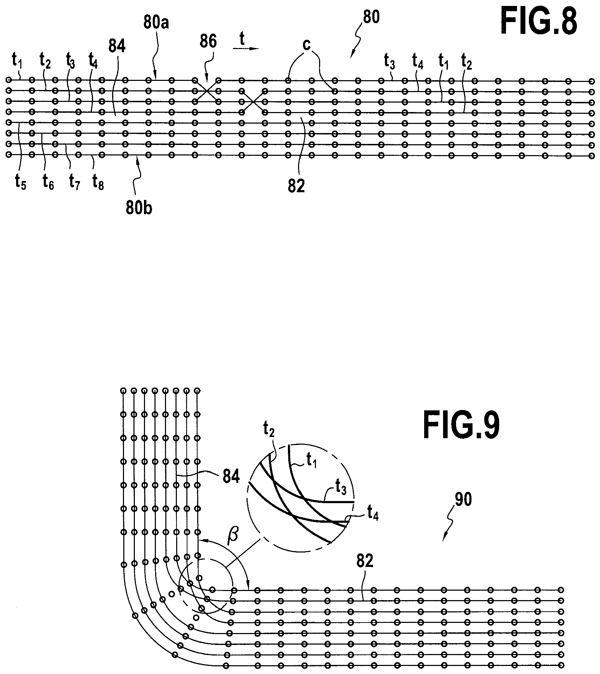

La figure 8 montre très schématiquement un plan de trame d'une structure fibreuse 80 tissée 3D en une seule pièce ayant des faces externes opposées 80a, 80b. La structure fibreuse 80 est formée d'une pluralité de couches de fils de chaîne c, des fils de chaîne de couches différentes étant liés entre eux par des fils de trame d'une pluralité de couches de fils de trame t₁ à t₈ qui réalisent un tissage 3D.

La structure fibreuse 80 comprend deux parties 82, 84 situées dans le prolongement l'une de l'autre et qui sont pliables l'une par rapport à l'autre au niveau d'une zone de pliure 86 pour former une préforme fibreuse 90 telle que montrée par la figure 9 avec les parties 82, 84 formant entre elles un angle β non nul inférieur à 180°. La préforme fibreuse 90 a dans l'exemple illustré une section sensiblement en L.

Les trajets des fils de trame t₁ et t₃ appartenant à la première et à la troisième des couches de fils de trame t₁ à t₈ à partir de la face 80a se croisent au niveau de la zone de pliure 86, la face 80a étant celle qui, après pliage, est située du côté intérieur de l'angle β formé par les parties 82 et 84. En outre, les trajets des fils de trame t₂ et t₄ appartenant à la deuxième et à la quatrième des couches de fils de trame t₁ à t₈ à partir de la face 80a se croisent également au niveau de la zone de pliure 86.

Par cette disposition, comme le montre le détail à échelle agrandie de la figure 9, le rayon de courbure imposé notamment aux fils t₁ et t₂ est encore agrandi en comparaison avec le mode de réalisation des figures 1 et 2.

La densification de la préforme fibreuse 90 par une matrice permet d'obtenir une pièce en matériau composite du type de celle de la figure 3.

La densification d'une préforme fibreuse obtenue après mise en forme d'une structure fibreuse est réalisée en formant une matrice de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique. Dans le cas d'une matrice en carbone ou en céramique, la densification pourra être réalisée par infiltration chimique en phase gazeuse ou CVI ("Chemical Vapour Infiltration") ou par imprégnation par une composition liquide contenant une résine précurseur de carbone ou de céramique et traitement thermique de pyrolyse ou céramisation du précurseur, ces procédés étant bien connus en soi. Les fibres de la préforme fibreuse sont également en un matériau choisi en fonction de l'application envisagée, par exemple en verre, en carbone ou en céramique.

On notera enfin que, dans les modes de réalisation décrits des structures et préformes fibreuses, la trame et la chaîne pourront être substituées l'une à l'autre.

## Revendications

1. Structure fibreuse tissée par tissage tridimensionnel avec une pluralité de couches de fils de chaîne (c) liées entre elles par des fils de trame d'une pluralité de couches de fils de trame, la structure fibreuse ayant une première partie (12) et une deuxième partie (14) situées dans le prolongement l'une de l'autre en direction trame et pliables l'une par rapport à l'autre pour former un angle au niveau d'une zone de pliure, la structure étant **caractérisée en ce que**
dans la zone de pliure (16) et dans chaque plan de trame de la structure fibreuse (20), deux fils de trame situés dans une région adjacente à une face externe de la structure fibreuse située du côté intérieur de l'angle ont des trajets qui se croisent.

2. Structure fibreuse selon la revendication 1 dans laquelle l'un des deux fils de trame est celui qui, dans la première partie (12) ou dans la deuxième partie (14), est le plus proche de la face externe.

3. Structure fibreuse selon la revendication 2, dans laquelle, dans la zone de pliure (16), les fils des deux couches de fils de trame les plus proches de la face externe de la structure fibreuse ont des trajets qui se croisent.

4. Structure fibreuse selon la revendication 2, dans laquelle, dans la zone de pliure (16), les fils de la première et de la troisième couches de fils de trame à partir de la face externe de la structure fibreuse ont des trajets qui se croisent, de même que les fils de la deuxième et de la quatrième couches de fils de trame.

5. Structure fibreuse tissée par tissage tridimensionnel avec une pluralité de couches de fils de trame liées entre elles par des fils de chaîne d'une pluralité de couches de fils de chaîne, la structure fibreuse ayant une première partie et une deuxième partie situées dans le prolongement l'une de l'autre en direction chaîne et pliables l'une par rapport à l'autre pour former un angle au niveau d'une zone de pliure, structure dans laquelle :
dans la zone de pliure et dans chaque plan de chaîne de la structure fibreuse, deux fils de chaîne situés dans une région adjacente à une face externe de la structure fibreuse située du côté intérieur de l'angle ont des trajets qui se croisent.

6. Structure fibreuse selon la revendication 5, dans laquelle l'un des deux fils de chaîne est celui qui, dans la première partie ou dans la deuxième partie, est la plus proche de la face externe.

7. Structure fibreuse selon la revendication 6, dans laquelle, dans la zone de pliure, les fils des deux couches de fils de chaîne les plus proches de la face externe de la structure fibreuse ont des trajets qui se croisent.

8. Structure fibreuse selon la revendication 6, dans laquelle, dans la zone de pliure, les fils de la première et de la troisième couches de fils de chaîne à partir de la face externe de la structure fibreuse ont des trajets qui se croisent, de même que les fils de la deuxième et de la quatrième couches de fils de chaîne.

9. Préforme fibreuse formée par une structure fibreuse tissée par tissage tridimensionnel avec une pluralité de couches de fils de chaîne (c) liées entre elles par des fils de trame d'une pluralité de couches de fils de trame, la préforme fibreuse ayant une première partie (12) et une deuxième partie (14) situées dans le prolongement l'une de l'autre en direction trame et formant entre elles un angle par pliage au niveau d'une zone de pliure, la préforme étant **caractérisée en ce que**
dans la zone de pliure (16) et dans chaque plan de trame de la structure fibreuse (20), deux fils de trame situés dans une région adjacente à une face externe de la structure fibreuse située du côté intérieur de l'angle ont des trajets qui se croisent.

10. Préforme fibreuse selon la revendication 9, dans laquelle l'un des deux fils de trame est celui qui, dans la première partie (12) ou dans la deuxième partie (14), est le plus proche de la face externe.

11. Préforme fibreuse selon la revendication 10, dans laquelle, dans la zone de pliure (16), les fils des deux couches de fils de trame les plus proches de la face externe de la structure fibreuse ont des trajets qui se croisent.

12. Préforme fibreuse selon la revendication 10, dans laquelle, dans la zone de pliure (16), les fils de la première et de la troisième couches de fils de trame à partir de la face externe de la structure fibreuse ont des trajets qui se croisent, de même que les fils de la deuxième et de la quatrième couches de fils de trame.

13. Préforme fibreuse formée par une structure fibreuse tissée par tissage tridimensionnel avec une pluralité de couches de fils de trame liées entre elles par des fils de chaîne d'une pluralité de couches de fils de chaîne, la préforme fibreuse ayant une première partie et une deuxième partie situées dans le prolongement l'une de l'autre en direction chaîne et formant entre elles un angle par pliage au niveau d'une zone de pliure, préforme dans laquelle :
dans la zone de pliure et dans chaque plan de chaîne de la structure fibreuse deux fils de chaîne situés dans une région adjacente à une face externe de la structure fibreuse située du côté intérieur de l'angle ont des trajets qui se croisent.

14. Préforme fibreuse selon la revendication 13, dans laquelle, l'un des deux fils de chaîne est celui qui, dans la première partie ou dans la deuxième partie, est le plus proche de la face externe.

15. Préforme fibreuse selon la revendication 14, dans laquelle, dans la zone de pliure, les fils des deux couches de fils de chaîne les plus proches de la face externe de la structure fibreuse ont des trajets qui se croisent.

16. Préforme fibreuse selon la revendication 14, dans laquelle, dans la zone de pliure, les fils de la première et de la troisième couches de fils de chaîne à partir de la face externe de la structure fibreuse ont des trajets qui se croisent, de même que les fils de la deuxième et de la quatrième couches de fils de chaîne.

17. Pièce en matériau composite comprenant une préforme fibreuse selon l'une quelconque des revendications 9 à 16 densifiée par une matrice.

## Patentansprüche

1. Durch dreidimensionales Weben gewebte Faserstruktur mit einer Vielzahl von Kettfadenlagen (c), die durch Schussfäden einer Vielzahl von Schussfadenlagen untereinander verbunden sind, wobei die Faserstruktur einen ersten Teil (12) und einen zweiten Teil (14) aufweist, die in Schussrichtung in der Verlängerung voneinander gelegen sind und die zueinander gefaltet werden können, um in Höhe eines Faltbereiches einen Winkel zu bilden, wobei die Struktur **dadurch gekennzeichnet ist, dass**
in dem Faltbereich (16) und in jeder Schussebene der Faserstruktur (20) zwei Schussfäden, die sich in einem Bereich benachbart zu einer Außenseite der Faserstruktur, welche auf der Innenseite des Winkels gelegen ist, befinden, sich kreuzende Wege aufweisen.

2. Faserstruktur nach Anspruch 1, bei der einer der beiden Schussfäden derjenige ist, der in dem ersten Teil (12) oder in dem zweiten Teil (14) der Außenseite am nächsten gelegen ist.

3. Faserstruktur nach Anspruch 2, bei der in dem Faltbereich (16) die Fäden der beiden Schussfadenlagen, die der Außenseite der Faserstruktur am nächsten gelegen sind, sich kreuzende Wege aufweisen.

4. Faserstruktur nach Anspruch 2, bei der in dem Faltbereich (16) die Fäden der ersten und der dritten Schussfadenlage ausgehend von der Außenseite der Faserstruktur sich kreuzende Wege aufweisen, ebenso wie die Fäden der zweiten und der vierten Schussfadenlage.

5. Durch dreidimensionales Weben gewebte Faserstruktur mit einer Vielzahl von Schussfadenlagen, die durch Kettfäden einer Vielzahl von Kettfadenlagen untereinander verbunden sind, wobei die Faserstruktur einen ersten Teil und einen zweiten Teil aufweist, die in Kettrichtung in der Verlängerung voneinander gelegen sind und die zueinander gefaltet werden können, um in Höhe eines Faltbereiches einen Winkel zu bilden, Struktur bei der:
in dem Faltbereich und in jeder Kettebene der Faserstruktur zwei Kettfäden, die sich in einem Bereich benachbart zu einer Außenseite der Faserstruktur, welche auf der Innenseite des Winkels gelegen ist, befinden, sich kreuzende Wege aufweisen.

6. Faserstruktur nach Anspruch 5, bei der einer der beiden Kettfäden derjenige ist, der in dem ersten Teil oder in dem zweiten Teil der Außenseite am nächsten gelegen ist.

7. Faserstruktur nach Anspruch 6, bei der in dem Faltbereich die Fäden der beiden Kettfadenlagen, die der Außenseite der Faserstruktur am nächsten gelegen sind, sich kreuzende Wege aufweisen.

8. Faserstruktur nach Anspruch 6, bei der in dem Faltbereich die Fäden der ersten und der dritten Kettfadenlage ausgehend von der Außenseite der Faserstruktur sich kreuzende Wege aufweisen, ebenso wie die Fäden der zweiten und der vierten Kettfaden lage.

9. Faservorformling, gebildet von einer durch dreidimensionales Weben gewebten Faserstruktur mit einer Vielzahl von Kettfadenlagen (c), die durch Schussfäden einer Vielzahl von Schussfadenlagen untereinander verbunden sind, wobei der Faservorformling einen ersten Teil (12) und einen zweiten Teil (14) aufweist, die in Schussrichtung in der Verlängerung voneinander gelegen sind und die durch Falten in Höhe eines Faltbereiches einen Winkel miteinander bilden, wobei der Vorformling **dadurch gekennzeichnet ist, dass**
in dem Faltbereich (16) und in jeder Schussebene der Faserstruktur (20) zwei Schussfäden, die sich in einem Bereich benachbart zu einer Außenseite der Faserstruktur, welche auf der Innenseite des Winkels gelegen ist, befinden, sich kreuzende Wege aufweisen.

10. Faservorformling nach Anspruch 9, bei dem einer der beiden Schussfäden derjenige ist, der in dem ersten Teil (12) oder in dem zweiten Teil (14) der Außenseite am nächsten gelegen ist.

11. Faservorformling nach Anspruch 10, bei dem in dem Faltbereich (16) die Fäden der beiden Schussfadenlagen, die der Außenseite der Faserstruktur am nächsten gelegen sind, sich kreuzende Wege aufweisen.

12. Faservorformling nach Anspruch 10, bei dem in dem Faltbereich (16) die Fäden der ersten und der dritten Schussfadenlage ausgehend von der Außenseite der Faserstruktur sich kreuzende Wege aufweisen, ebenso wie die Fäden der zweiten und der vierten Schussfadenlage.

13. Faservorformling, gebildet von einer durch dreidimensionales Weben gewebten Faserstruktur mit einer Vielzahl von Schussfadenlagen, die durch Kettfäden einer Vielzahl von Kettfadenlagen untereinander verbunden sind, wobei der Faservorformling einen ersten Teil und einen zweiten Teil aufweist, die in Kettrichtung in der Verlängerung voneinander gelegen sind und die durch Falten in Höhe eines Faltbereiches einen Winkel miteinander bilden, Vorformling, bei dem:
in dem Faltbereich und in jeder Kettebene der Faserstruktur zwei Kettfäden, die sich in einem Bereich benachbart zu einer Außenseite der Faserstruktur, welche auf der Innenseite des Winkels gelegen ist, befinden, sich kreuzende Wege aufweisen.

14. Faservorformling nach Anspruch 13, bei dem einer der beiden Kettfäden derjenige ist, der in dem ersten Teil oder in dem zweiten Teil der Außenseite am nächsten gelegen ist.

15. Faservorformling nach Anspruch 14, bei dem in dem Faltbereich die Fäden der beiden Kettfadenlagen, die der Außenseite der Faserstruktur am nächsten gelegen sind, sich kreuzende Wege aufweisen.

16. Faservorformling nach Anspruch 14, bei dem in dem Faltbereich die Fäden der ersten und der dritten Kettfadenlage ausgehend von der Außenseite der Faserstruktur sich kreuzende Wege aufweisen, ebenso wie die Fäden der zweiten und der vierten Kettfaden lage.

17. Teil aus Verbundwerkstoff, umfassend einen Faservorformling nach einem der Ansprüche 9 bis 16, welcher durch eine Matrix verdichtet ist.

## Claims

1. A fiber structure woven by three-dimensional weaving with a plurality of layers of warp yarns (c) interlinked by weft yarns of a plurality of layers of weft yarns, the fiber structure having a first portion (12) and a second portion (14) situated extending each other in the weft direction and foldable relative to each other so as to form an angle at a fold zone;
the structure being **characterized in that** in the fold zone (16) and in each weft plane of the fiber structure (20), two weft yarns situated in a region adjacent to an outside face of the fiber structure situated at the inside of the angle have paths that cross.

2. A fiber structure according to claim 1, wherein one of the two weft yarns is the yarn that, in the first portion (12) or in the second portion (14), is the closest to said outside face.

3. A fiber structure according to claim 2, wherein, in the fold zone (16), the yarns of the two layers of weft yarns closest to the outside face of the fiber structure have paths that cross.

4. A fiber structure according to claim 2, wherein, in the fold zone (16), the yarns of the first and third layers of weft yarns from the outside face of the fiber structure have paths that cross, and likewise the yarns of the second and fourth layers of weft yarns.

5. A fiber structure woven by three-dimensional weaving with a plurality of layers of weft yarns interlinked by warp yarns of a plurality of layers of warp yarns, the fiber structure having a first portion and a second portion situated extending each other so as to form an angle in the warp direction and foldable relative to each other at a fold zone, structure wherein:
in the fold zone and in each warp plane of the fiber structure, two warp yarns situated in a region adjacent to an outside face of the fiber structure situated at the inside of the angle have paths that cross.

6. A fiber structure according to claim 5, wherein one of the two warp yarns is the yarn that, in the first portion or in the second portion, is the closest to said outside face.

7. A fiber structure according to claim 6, wherein, in the fold zone, the yarns of the two layers of warp yarns closest to the outside face of the fiber structure have paths that cross.

8. A fiber structure according to claim 6, wherein, in the fold zone, the yarns of the first and third layers of warp yarns from the outside face of the fiber structure have paths that cross, and likewise the yarns of the second and fourth layers of warp yarns.

9. A fiber preform formed by a fiber structure woven by three-dimensional weaving with a plurality of layers of warp yarns (c) interlinked by weft yarns of a plurality of layers of weft yarns, the fiber structure having a first portion (12) and a second portion (14) situated extending each other in the weft direction and forming between them an angle by folding at a fold zone;
the structure being **characterized in that** in the fold zone (16) and in each weft plane of the fiber structure (20), two weft yarns situated in a region adjacent to an outside face of the fiber structure situated on the inside of the angle have paths that cross.

10. A fiber preform according to claim 9, wherein one of the two weft yarns is the yarn that, in the first portion (12) or in the second portion (14), is the closest to said outside face.

11. A fiber preform according to claim 10, wherein, in the fold zone (16), the yarns of the two layers of weft yarns closest to the outside face of the fiber structure have paths that cross.

12. A fiber preform according to claim 10, wherein, in the fold zone (16), the yarns of the first and third layers of weft yarns from the outside face of the fiber structure have paths that cross, and likewise the yarns of the second and fourth layers of weft yarns.

13. A fiber preform woven by three-dimensional weaving with a plurality of layers of weft yarns interlinked by warp yarns of a plurality of layers of warp yarns, the fiber structure having a first portion and a second portion situated extending each other in the warp direction and forming between them an angle by folding at a fold zone, preform wherein:
in the fold zone and in each warp plane of the fiber structure, two warp yarns situated in a region adjacent to an outside face of the fiber structure situated on the inside of the angle have paths that cross.

14. A fiber preform according to claim 13, wherein, one of the two warp yarns is the yarns that, in the first portion or in the second portion, is the closest to said outside face.

15. A fiber preform according to claim 14, wherein, in the fold zone, the yarns of the two layers of warp yarns closest to the outside face of the fiber structure have paths that cross.

16. A fiber preform according to claim 14, wherein, in the fold zone, the yarns of the first and third layers of warp yarns from the outside face of the fiber structure have paths that cross, and likewise the yarns of the second and fourth layers of warp yarns.

17. A composite material part comprising a fiber preform according to any one of claims 9 to 16 densified by a matrix.
